# EUROPEAN PATENT APPLICATION

(11) **EP 4 005 964 A1**
(43) Date of publication of application: **01.06.2022**
(21) Application number: 20210177.0
(22) Date of filing: 27.11.2020
(51) Int. Cl.: B66C 1/10, B66C 13/08, F03D 13/10

(54) **LIFTING APPARATUS FOR A LIFTING CRANE**

(71) Applicant: Siemens Gamesa Renewable Energy A/S, 7330 Brande (DK)
(72) Inventor: Jepsen, Andreas Winther, 7100 Vejle (DK); Moeller, Jesper, 7330 Brande (DK)
(74) Representative: Aspacher, Karl-Georg

(57) **Abstract**

Lifting apparatus for a lifting crane (1), adapted to carry an elongated component (8), comprising a frame (6) with at least one holding means (29) for holding the component with an essentially horizontal orientation and a crane connection device (15) for connecting the apparatus (5) to the lifting crane (1), characterized in that a tilting system (14) for actively tilting the frame (6) or the apparatus (5) relative to the horizontal plane.

## Description

The invention refers to a lifting apparatus for a lifting crane, adapted to carry an elongated component, comprising a frame with at least one holding means for holding the component with an essentially horizontally orientation and a crane connection device for connecting the apparatus to the lifting crane.

Large and elongated components are usually moved by a lifting crane, which is adapted to lift and position the respective component for attaching it for example to a construction. An example of such a component is a rotor blade for a wind turbine, which, when the wind turbine is installed, needs to be positioned and fixed to the hub of the wind turbine, to which usually three rotor blades are attached. For lifting such a component respectively a rotor blade, a specific lifting apparatus is used, which is connected to the lifting crane, and which is adapted to safely carry the component. The lifting apparatus comprises a frame with a holding means comprising at least two support arms for carrying the component, which support arms have e.g. an L- or C-shape. Unlike other lifting apparatus, which lift the component hanging vertically at the lifting apparatus, this lifting apparatus is adapted to carry the component respectively the rotor blade with an essentially horizontal orientation. This horizontal orientation is advantageous for lowering the loads applied to the crane boom, which become higher due to the increasing size of the blades. The lifting apparatus fixes the component at a position somewhere between its ends so that the component extends weight balanced to both sides of the apparatus and is, when lifted, essentially horizontal, which means that the longitudinal axis of the apparatus is horizontal and also the longitudinal axis of the component is at least essentially horizontal. For controlling the horizontal movement in the horizontal plane of the component respectively the blade, a tagline system is usually used which comprises several cables attached to the lifting apparatus. This allows for a certain control of the horizontal movement.

Nevertheless, especially when the component respectively the blade is lifted at higher wind speeds, a certain vertical movement occurs which is especially problematic in view of a vertical movement of the blade root which blade root needs to be precisely positioned relative to the attachment interface of the hub. This vertical movement respectively vertical tilt moment results from the interaction of the component with blowing wind and in case of a rotor blade especially from the airfoil cross-section of the rotor blade. When the wind blows with higher speed around the rotor blade, different wind speeds are given at the upper and the lower side of the blade, resulting in a pressure difference between the upper and the lower side. This pressure difference leads to a certain suction or drag effect moving the blade to the lower pressure side. This effect in turn results in the tilting movement, as the blade as a whole follows this effect. This effect is commonly known from airplane wings, but has a negative influence on the installation process of for example a wind turbine.

The vertical movement may negatively influence the positioning and fixing process. As it is caused by the wind interacting with a component, especially the airfoil-shaped blade, it restricts the installation to times where the wind speed is quite low and therefore narrows the weather window in which the installation can be done. This is especially a problem at off-shore installations of wind turbines as the wind over the sea is often strong. Further, the unwanted vertical movement causes long installation times due to the problems in positioning the root.

It is therefore an object of the invention to provide an improved lifting apparatus.

For addressing the object, the invention proposes a lifting apparatus for a lifting crane, adapted to carry an elongated component comprising a frame with at least one holding means for holding the component with an essentially horizontal orientation and crane connection device for connecting the apparatus to the lifting crane, which lifting apparatus is characterized in that a tilting system for actively tilting the frame with the holding means relative to the horizontal plane.

The inventive lifting apparatus, usually also called a yoke, is equipped with a tilting system which is adapted to actively tilt the frame with the component fixed in the holding means around a horizontal axis, so that the component is tilted relative to the horizontal plane respectively is angled relative to the horizontal plane. The tilting system is adapted to change the relative orientation of the frame to the horizontal plane by creating a rotational moment of the frame around a horizontal axis, resulting in a tilting movement of the frame and the component, which pivot around the horizontal axis. This makes the frame and therefore the component to change its spatial orientation. One end of the frame and thus of the component moves vertically upwards, while the other end moves vertically downwards. As the tilting system is controlled preferably in response to a given or upcoming tilting movement caused by environmental circumstances, i.e. the interaction of the component with the blowing wind, the tilting system is controlled such that a counter tilt movement is provided by the geometrical change of the frame arrangement so that the unwanted tilt movement can be compensated or balanced. The overall goal of the active tilting is to bring or maintain the component in a designated horizontal position. In case of a turbine blade the overall goal is to bring or maintain the blade root, which is, as said, to be fixed to the connection interface of the hub, in a designated connection position in which it has a perfect alignment with the connection interface.

The inventive tilting system is integrated in the inventive lifting apparatus and therefore allows an active change of the geometry of the lifting apparatus itself in regard to the orientation or alignment of the frame relative to the ropes of the crane at which the frame is hanging by means of the crane connection device. This results in a change of the spatial orientation of the frame and therefore also the component fixed in the frame relative to the horizontal plane, allowing to control a dedicated vertical movement of the frame and therefore the component around a horizontal axis.

According to the invention, the tilting system is adapted to shift the crane connection device relative to the frame. The realization of the active and intended tilt respectively counter tilt is based on a shift of the crane connection device relative to the frame resulting in a shift of the attachment point or attachment centre of the crane connection device to the crane respectively the hook relative to the centre of gravity of the lifting apparatus and the fixed component. In the initial position, when the tilting system is not activated, the centre of gravity is exactly vertically below the connection point or connection centre of the crane connection device to the crane respectively the hook. In this initial position the component is horizontally balanced. If now the tilting system shifts the crane connection device relative to the frame and changes their spatial relation, the vertical alignment of the connection point or connection centre and the centre of gravity is no longer given. Instead a certain horizontal shift between the connection point or centre and the centre of gravity is given. As the lifting apparatus comprising the component is not rigidly fixed to the crane respectively the hook, but can pivot or swivel around a horizontal axis relative to the crane connection, the system or arrangement can re-balance again, as the centre of gravity will tend to move again exact vertically underneath the connection point or connection centre so that there again is a vertical alignment. Due to this re-balancing movement the frame and therefore the component pivots or swivels around a horizontal axis which in turn results in a vertical movement of both ends of the component, the one end moves upwards, while the other end moves downwards. Depending on the shifting direction, it is possible to change the respective direction of movement of the ends.

Depending on the shifting direction, the centre of gravity may be shifted either to the left or the right, seen relative to the connection point or connection centre. Depending on the respective shifting direction, the re-balancing movement will therefore make the first end to either move vertically upwards or downwards, while the second end moves either downwards or upwards. It is obvious that by simply changing the shifting direction it is possible to realize a vertical counter tilt movement for example of the root of a turbine blade with the root moving either vertically upwards or downwards. The respective vertical moving direction depends on the unwanted tilt movement introduced in the system for example due to the interaction of the airfoil-shaped blade with the wind. The counter tilt movement is controlled such that the counter tilt movement compensates the unwanted wind-induced movement respectively that the counter tilt moment compensates the unwanted induced tilt moment in order to stabilize or maintain the root in the designated position respectively connection position.

This inventive active tilting possibility allows for an improved and especially faster installation process, e.g. of a wind turbine blade, which may now also be performed at higher wind speeds for example up to 16 m/s or higher, whereby a rotor blade installation at these high wind speeds is either not possible with known lifting apparatus or takes a lot more time due to the uncontrollable vertical tilting or vertical movement.

As mentioned, the crane connection device is shifted relative to the frame. The word" shift" means both a change of the angulation of both relative to each other, i.e. that their angular relationship is changed by tilting them relative to each other. But it also means that they are linearly movable relative to each other for changing their relative position to each other seen in the lengthwise direction of the frame.

Regarding the set-up of the crane connection device and the mechanical set-up regarding the shift of the crane connection element relative to the flame, various embodiments are feasible, as mentioned. The crane connection device may comprise at least one crane connection element and at least one connection arm or connection arm construction comprising several connection arms coupling the connection element to the frame. The connection element is adapted to be connected to the crane respectively the hook, what is usually realized by means of several cables which are fixed at the crane hook and the connection element. These cables allow a certain tilt of the connection element which is usually beam-like, relative to the horizontal plane. The hook usually comprises two separate hook parts, to which at least one cable is attached which cable is also fixed to the connection element. The connection element itself is connected to the frame by at least one connection arm or a connection arm construction comprising two or more arms. The connection element is connected to the frame by means of these connection arm or connection arms which are attached to the connection element and which are attached or coupled to or with the frame.

In a first embodiment of this inventive solution, the connection arm or the connection arms are pivotally attached to the connection element and the frame. As the or each connection arm is pivotally connected with both ends to the connection element and the frame, the connection element and the frame may be shifted relative to each other with tilting system, which shift as mentioned results in a respective tilt. By shifting the connection element relative to the frame the previously vertically aligned connection point or connection centre and the centre of gravity now fall apart respectively are shifted, resulting in the re-balancing movement. If for example a beam-like connection element and two separate connection arms or two pairs of separate connection arms connecting the beam-like connection element to the frame are provided, a kind of parallelogram is realized which allows to shift the beam-like connection element horizontally relative to the frame. But also only one single connection arm or a pair of parallel connection arms connecting the connection element to the frame allows for a shift, as due to the pivot arrangement of the connection arm or arms to the connection element and the frame the connection element may be tilted relative to the frame.

According to an alternative embodiment to the pivot arrangement, the connection arm or the connection arms may be linearly movable along the frame. In this embodiment the connection arm or connection arms, which here may build a kind of yoke, in which the frame or a beam of the frame is inserted, is either rigidly fixed to the connection element or may be pivotally attached to the connection element. In any way, the connection to the frame respectively a respective frame beam is such that the connection arm or the connection arms construction is linearly movable along the frame respectively the frame beam so that the connection element and the frame may be shifted horizontally by the linear movement of the connection arm or arms along the frame. Also, in this embodiment when the shift is performed from the initial position, the previous vertical alignment of the connection point or connection centre and the centre of gravity is horizontally shifted and no longer adjusted in line, resulting in the re-balancing movement of the centre of gravity until they are again vertically aligned.

Performing the respective change in geometry regarding the set-up or arrangement of the connection device respectively the connection element and the frame respectively for performing the shifting, the tilting system may comprise at least one controllable actuator for tilting the frame relative to the crane connection device respectively for shifting or moving the connection element relative to the frame respectively vice versa. The actuator is controllable by means of a respective controller which is adapted to provide respective control signals for activating the controller in order to finally generate the respective counter tilt movement or moment. The actuator is preferably coupled to the or one of the connection arms and the frame for shifting them relative to each other. By this coupling the actuator may for example swivel the connection arm around its pivot axis at the frame, resulting in a shifting movement of the connection element relative to the frame which is crucial for the re-balancing movement. Also, when a linear movement arrangement of the connection arm or arms at the frame is provided, the actuator coupled to the frame and the at least one connection arm can quite simply realize the requested linear shifting movement.

An actuator may be or comprise for example a hydraulic or pneumatic or electric cylinder which is coupled with the one end of the cylinder to the frame and with the other end, i.e. the end of the piston or piston rod, to the connection arm. By extending or retracting the piston out of or into the cylinder, the length of the actuator can be changed and adjusted resulting in the respective pivot or linear movement of the connected items relative to each other. In an alternative, also an electric motor may be used as an actuator. This electric motor is for example attached to the frame and is adapted to linearly move a rod or the like coupled to the connection arm. Depending on the direction of movement, the connection arm moves respectively resulting in the requested shift.

Another alternative of such an actuator may be a spindle drive, preferably driven by an electric motor. The spindle may be coupled to the connection arm and may be extended or retracted from or to a nut running on the spindle and driven by the motor for performing the requested shift.

While only one actuator may be provided, it is also possible to provide more actuators which are synchronously controlled. For example two parallel actuators, e.g. two hydraulic or pneumatic cylinders, may be arranged.

For controlling the movement of the at least one actuator preferably a control device is provided. This control device allows for a precise control of the actuator in order to perform the requested shift so that the resulting counter tilt movement is precise enough in order to balance or compensate the unwanted tilt movement or moment.

Preferably, at least one sensor means for sensing a given or upcoming vertical tilting of the lifting apparatus or of the frame or of the holding means is provided, whereby the control device is adapted to control the actuator depending on the sensor means information. This at least one sensor means allows for a very exact control. The sensor means is, in general, adapted to sense the vertical tilt movement of the lifting apparatus. It is preferably arranged at the frame or a support arm, while certainly several various sensors may be arranged at different positions. The or each sensor means communicates with the at least one control device. The control device is adapted to process the respective sensor means information and to recognize any upcoming or given inadmissible vertical tilt movement of the component respectively the blade or the blade root. Based on the measured vertical tilt movement, which is either already given or which may be expected due to the sensor information, the control device may activate and control the tilting system respectively the one or several actuators for effecting the change of the spatial orientation of the components for finally generating the counter tilt moment respectively the counter tilt movement. The sensor means may measure the orientation or movement directly or, maybe with one or more separate sensors, for example the wind speed or the wind direction as indirect parameters for determining a given or upcoming tilting movement.

The sensor means or the sensor may be any kind of sensor which is adapted for directly or indirectly evaluating pieces of information which are direct or indirect pieces of information regarding the spatial orientation and therefore the tilting movement or tilting position. An example may be a position sensor or acceleration sensor.

The tilting system may be adapted to rotate the frame relative to the connection element or an angle of at least 20°, preferably of at least 40°. Even a small adjustment of the angled orientation over a maximum angle of 20°, resulting in a tilting from the initial position of ±10°, may be sufficient to change the tilt respectively the orientation respectively to provide the needed tilt movement. A larger rotational compensation angle for example of 40° allows for a tilt of ±20°. The initial or basic position is defined by the position, in which the connection element and the frame are in a basic initial position in which the component respectively the blade is fixed for the first time on the ground at the beginning of the lifting process. From this initial position or orientation, a respective angulation in both directions is possible. Certainly, the respective necessary tilting direction is determined by the respective control device. The control device also determines the necessary tilting angle which needs to be controlled in order to compensate the unwanted tilting movement and to avoid an over-compensation which means that the frame respectively the component is rotated around the horizontal axis only over the necessary angle which is calculated to be sufficient to compensate the expected or given vertical movement. Certainly, the spatial orientation of the root respectively its movement is constantly sensed by the or any kind of sensor means so that the control device may constantly monitor the effect the active tilting has in order to compensate the vertical movement.

It needs to be noted, that the tilting system may additionally also be used to exactly position the component even if no environmental induced tilt needs to be compensated, as also a misalignment of the component to the horizontal plane, resulting from an incorrect initial position of the component at the holding means making the component slightly tilted relative to the horizontal plane, may be compensated and the component may be brought in perfect orientation in the horizontal plane.

In addition to the tilting system, the inventive lifting apparatus may also be equipped with a pitching system for pitching the component around its longitudinal axis. This pitching system is adapted to pitch or rotate the component around its longitudinal axis. As the component in form of a rotor blade has a non-circular cross-section, i.e. an airfoil-cross-section, the pitching or rotation of the component by the pitching system changes the spatial orientation of the non-cylindric surface respectively the upper and lower surface e.g. of the airfoil rotor blade. As mentioned, when the wind flows around the rotor blade with a higher wind speed, different wind speeds or different wind flows are given at the upper and the lower side of the blade, resulting in a pressure difference between the upper and the lower blade side. Resulting from the pressure difference, a certain suction or drag effect occurs which makes the blade move in a vertical direction creating the previously mentioned problems. This negative effect depends on the orientation of the component respectively its non-circular cross-section part respectively its positioning relative to the wind direction. In this context, the term "rotation around the longitudinal axis of the component" does not necessarily mean that the horizontal component axis is the axis of rotation. Preferably, the axis of rotation of the pitching system falls together with the components longitudinal axis. But for the inventive change of the spatial surface orientation it is sufficient when the component orientation is changed by pivoting it around its longitudinal axis which is also realized when the axis of rotation, i.e. the rotation axis of the pitching system, does not fall together with the longitudinal axis of the component. Inventively, the essentially horizontally orientated component is pitched by the pitching system having a rotation axis so that the component rotates in response to the rotational movement of the pitching means. The rotation and therefore the change of the orientation of the component relative to the direction of the blowing wind realizes an effect on the vertical movement of the component and therefore for example of the blade root for counteracting an unwanted vertical movement.

The inventive pitching system integrated in the lifting apparatus now allows for changing this spatial orientation, i.e. the orientation of the non-circular surface relative to the wind direction and therefore allows for a change of the wind flow over the upper and the lower side of the component surface. The length of the respective flow paths can be changed by the rotation of the component and the change of the spatial orientation, resulting in a change of the respective pressure generated at the upper and the lower side and therefore the pressure difference which is causal for the vertical root end movement. By rotating the component and therefore changing its spatial surface orientation a counter acting tilt moment or tilt movement can therefore be generated. This counteracting tilt moment or tilt movement can at least in part balance the tilt moment or tilt movement caused by the wind acting on the component before the rotation was initiated. Therefore, by changing the aerodynamic arrangement of the component respectively the rotor blade fixed to the lifting apparatus, the unwanted tilt moment or tilt movement induced by higher wind speeds can at least in part be compensated.

For pivoting the component around its longitudinal axis, the pitching system interacts with the at least one holding means for holding the component which holding means is pivotable around a rotation axis, e.g. the longitudinal axis of the frame, for pitching the component. The rotation axis of the pitching system respectively of the holding means and the longitudinal axis of the frame respectively of the lifting apparatus and the general longitudinal axis of the component are parallel. Therefore, by rotating the at least one holding means around the rotation axis, which may be the longitudinal horizontal frame axis, also the component rotates. As mentioned, the term "rotation around the longitudinal axis of the component" does not necessarily mean that the horizontal component axis is the axis of rotation. This is the case when the axis of rotation does not fall together with the horizontal axis of the component, as is maybe the case when the holding means rotates. Nevertheless, also in this case the spatial orientation is changed creating the inventive counter tilt moment.

The additional integration of the pitching system together with the tilting system allows for another additional way of compensating any unwanted tilt. Both, the tilting and the pitching system may be controlled synchronously, as they both focus on the same result, i.e. providing a vertical counter tilt movement. The respective actions may overlayed so that a final counter tilt movement may result, based on the performance of the tilting system and the performance of the pitching system.

The lifting apparatus may comprise at least two support arms, whereby separate holding means adapted for a synchronized rotation are arranged at each support arm, or whereby the holding means extends from one support arm to the other. Usually, such a lifting apparatus respectively its frame has two C-shaped support arms for carrying the component. At these support arms or in the arm region the at least one holding means is arranged. In a first embodiment it is possible to have a respective holding means arranged at each support arm, whereby the component respectively the blade extends through both holding means, where it is firmly fixed. Both holding means rotate in a synchronized manner around the common rotation axis, thereby pitching the component. In another alternative, only one common holding means, which extends from one support arm to the other is provided, which firmly fixes the component. Also, by rotating this single holding means, the inventive pitching may be performed.

Preferably, the at least one or each holding means or the two holding means are adapted to hold the component in a region with a non-circular cross-section. As already mentioned, the non-circular cross-section extends over at least half of the length of the component. In case of a turbine blade this non-circular or airfoil cross-section extends over nearly the whole length of the blade except for a very short root section, which has a circular cross-section and by which the blade is attached to the hub. For a weight balance fixation, in order to hold the blade with a horizontal orientation, the one or both holding means need to fix or be attached to the component in the airfoil area. The or each holding means may comprise specially designed holding pads or the like, which are adapted to be coupled to the component surface in a form-fit or form-corresponding manner.

In a further embodiment of the invention, the or each holding means may comprise a C-shaped holding part with holding elements, e.g. the above-mentioned holding pads or the like, for engaging the component, which holding part is movable along an arched guide means. As mentioned, the inventive pitching system respectively the holding means, which is part of which the pitching system, rotates around a rotation axis, which is a horizontal axis. For attaching the holding means to the blade, the holding part or the holding parts are C-shaped, so that the blade can be inserted in the C-shaped holding part and be firmly fixed by the holding elements like the pads or the like. For the rotation the or each holding part is movable along an arched guide means, which defines the circular movement path for performing the pitching respectively rotation action. This guide means may for example be an arched guide rail or the like, along which the respective C-shaped holding part moves.

For a smooth movement it is preferable that the holding part respectively each holding part is guided on rollers or slide elements arranged in or along the guide means. According to this embodiment several rollers are arranged at the guide means, for example the arched guide rail, on which rollers the respective holding part rests respectively moves during the rotational displacement. This embodiment therefore proposes a kind of roller bearing system for allowing a smooth and precise movement of the holding part relative to the frame respectively the support arms. In an alternative also a sliding bearing may be used comprising slide elements for slidingly guiding the holding part. The sliding elements may be arranged both on the holding means and the guide means.

For moving the holding means respectively the holding part in order to rotate it and pitch the component, the or each holding means may be movable by at least one controllable actuator. This actuator is adapted to move the holding means respectively the holding part for rotating it. If only one holding means respectively holding part is provided, one actuator may be sufficient. If two holding means respectively holding parts are provided, each holding means is provided with a separate actuator, while both actuators are synchronized for a synchronous movement of both holding means respectively holding parts.

The actuator may be any kind of actuator which is adapted to cause or perform the rotational movement. An actuator may be or may comprise a hydraulic or pneumatic or electric cylinder, which may be lengthened or shortened, and which is coupled to the moving part of the holding means respectively the holding part. It may also be an electric motor as a drive means, which is coupled for example by a mechanical toothed connection to the moving part of the holding means respectively the holding part. Also, a spindle drive may be used as a mechanical connection between an electric motor and the moving part. The mentioned actuator types are not limited, as also other types may be used if appropriate.

Preferably, the at least one control device which controls the tilting system, may also control the pitching system. The control device, no matter if it only controls the tilting system or both, the tilting and the pitching system, comprises a respectively programmable control which allows for a very precise controlling of the movement of the respective components respectively of the respective actuators.

The at least one sensor means or the several sensor means already provided for delivering the measurement values, based on which the control of the tilting system is provided, may also be used for the measurement input for controlling the pitching system.

Also here, the pitching system is preferably adapted to rotate the component around an angle of at least 20°, preferably of at least 40°, and especially over a maximum angle of 90°. Here, the rotation angle may be much greater than the angle of the tilting system, as here the longitudinal component is rotated around its longitudinal axis. Therefore, a greater angle may be run through if need be. Also here, even if a small adjustment of the angle orientation over a maximum angle of 20° is provided, resulting in a pitch of ±10°, seen from the basic orientation of the component when it is first fixed in the lifting apparatus, may be sufficient to change the aerodynamic situation and to counter an unwanted tilt movement. From this basic orientation, a rotation in both directions, i.e. a plus/minus pitch is possible, whereby the respective pitching direction certainly depends on the direction of the vertical movement which shall be compensated. When, for example, the blade root moves vertically upwards, the pitching direction for countering this movement by inducing a compensation moment in the opposite direction is certainly different to the pitching direction which is necessary when the blade root moves vertically downwards. In this case, the compensation moment and therefore the pitching direction is opposite. Certainly, the respective necessary pitching direction is determined by the respective control device which also needs to determine the necessary pitching angle which needs to be controlled in order to compensate the unwanted tilting movement and to avoid an overcompensation so that the component is rotated only over the necessary angle.

The invention further refers to a crane comprising a lifting means with a lifting apparatus as described above. The crane may comprise a lifting means comprising one or more lifting cables, to which a connection device, usually the hook, is attached at which the crane connection device of the lifting apparatus is attached. The lifting apparatus may tilt relative to this connection in a vertical direction, as previously mentioned. The counter tilt moment or the counter tilt movement counters or compensates such an unwanted vertical tilt moment or unwanted vertical tilt movement and stabilizes the component respectively the rotor blade in its horizontal position.

Furthermore, for also countering any horizontal movement of the component respectively the blade in the horizontal plane, i.e. any tilting or rotation around the vertical axis, one or more taglines may be attached to the lifting apparatus.

Finally, the invention refers to a method for lifting an elongated component, using a crane as described above. This method is characterized in that during the lifting process, when a vertical tilt movement of the lifting apparatus or at least the possibility of such a vertical tilting movement is detected, the tilting system is controlled by a control device, preferably based on the provided sensor means information, for tilting the frame around a horizontal axis relative to the crane connection element for counter acting the tilt movement. Even when the possibility of such an unwanted vertical tilting movement is preferably sensed by one or various sensors, this sensor information may be processed and used as a hint that an unwanted vertical movement may occur, allowing for the control device to immediately react beforehand.

During the lifting process, the orientation of the lifting apparatus may constantly be sensed by the at least one sensor means of the lifting apparatus, whereby the tilting system is controlled by the control device based on the provided sensor means information. The one or the several sensor means allow for constantly monitoring the position respectively the movement or any other relevant information like wind speed or wind direction, while the control device constantly processes any sensor means information to immediately control the tilting system.

Further, the crane connection device may be shifted relative to the frame for changing the spatial orientation of the crane connection device relative to the frame, either by changing their angular or linear relationship.

Furthermore, in addition to controlling the tilting system during the lifting process also the pitching system may be controlled by the control device based on the provided sensor means information. As mentioned, the lifting apparatus may in addition to the tilting system also be provided with a pitching system which may separately be controlled by the common control means or a separate control means. This allows to control both, the tilting and the pitching system in order to only use their separate effects, or to use both their effects and to overlay them in order to provide a common counter tilt movement acting in the necessary direction.

The control device therefore controls the at least one actuator of the tilting system and/or the at least one actuation means of the pitching system.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: shows a principle sketch of a part of an inventive crane comprising an inventive lifting apparatus holding a rotor blade to be attached to a wind turbine,
- Fig. 2: shows an enlarged view of the lifting apparatus attached to the hook of a crane with the fixed component, with the arrangement being in the initial position,
- Fig. 3: the arrangement of fig. 2 with the crane connection device being shifted to a first side,
- Fig. 4: the arrangement of fig. 2 with the crane connection device being shifted to the other side,
- Fig. 5: a second embodiment of a lifting apparatus,
- Fig. 6: a third embodiment of a lifting apparatus,
- Fig. 7: a fourth embodiment of a lifting apparatus,
- Fig. 8: shows a side view of the lifting apparatus with a cut through the blade seen from the tip of the blade, with the blade being fixed in a rotatable holding means and being in a basic position,
- Fig. 9: shows the arrangement of fig. 8 with the blade being rotated in a clockwise direction by the pitching system and
- Fig. 10: shows the arrangement of fig. 2 with the blade being rotated counter clockwise by the pitching system.

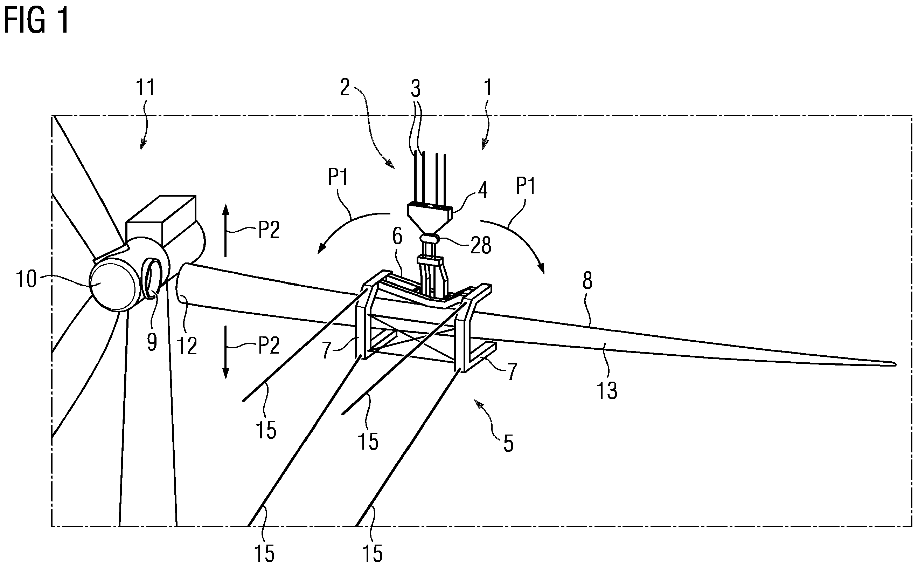

Fig. 1 shows a part of an inventive lifting crane 1 comprising a lifting device 2 with several cables 3, to which a connection device 4 comprising one or two hooks is attached, as commonly known.

To the connection device 4 an inventive lifting apparatus 5, often also called yoke, is attached. The lifting apparatus 5 comprises a frame 6 with two end-standing support arms 7, which here have a C-form.

A component, here a rotor blade 8, is carried by the lifting apparatus 5. The C-shaped support arms 7 are equipped with respective holding means for holding or gripping the rotor blade 8.

The rotor blade 8 is arranged in a horizontal direction and is lifted to be attached to a mounting interface 9 of a hub 10 of a wind turbine 11 shown in fig. 1. It is therefore necessary to precisely position the blade root 12, which connects to the airfoil-shaped blade body 13, exactly relative to the mounting interface 9. This lifting and positioning is sometimes performed while wind blows and therefore interacts with the rotor blade 8 making the rotor blade move.

The connection of the lifting apparatus 5 to the connection device 4 is not stiff. It is realized for example by a cable connection 28, which allows for the lifting apparatus 5 and therefore for the rotor blade 8 to rotate around a vertical axis. For stabilizing the lifting apparatus 5 respectively the blade 8 taglines 15 are attached to the lifting apparatus 5, by which a horizontal movement may be avoided or at least widely compensated.

The cable connection 28 does not only allow for a rotation around a vertical axis, but also for a tilting movement around a horizontal axis, which tilting movement is shown by the arrows P1. This tilting movement makes the lifting apparatus 5 tilt to the left or right side shown in fig. 1, which tilting movement results in a respective movement of the rotor blade 8. Therefore, depending on the tilting to the left or to the right, the blade root 12 either performs a vertical movement upwards or downwards, as shown by the arrows P2 in fig. 1. Therefore, its relative position to the mounting interface 9 may change due to such a vertical movement, which therefore needs to be counteracted.

For counteracting such a vertical movement, the lifting apparatus 5 comprises a tilting system 14, which is adapted to change the geometry of the lifting apparatus 5 for shifting the connection point or connection centre, in which the lifting apparatus 5 is attached to the crane respectively the connection device, relative to the centre of gravity of the combination of lifting apparatus 5 and blade 8, which shift finally results in an intended tilt of the frame 6 of the lifting apparatus 5 and therefore also the blade 8 in order to compensate an unwanted vertical movement of the blade root 12.

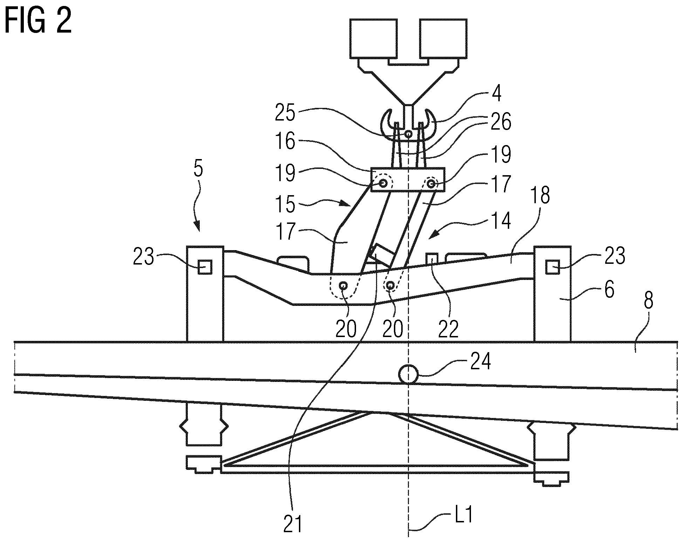

Fig. 2 shows a first embodiment of the lifting apparatus 5 with a first embodiment of a tilting system 14. The tilting system 14 comprises a crane connection device 15 comprising in this embodiment a beam-like crane connection element 16 and two connection arms 17, which connect the connection element 16 to the frame 6 respectively one or two parallel frame beams 18. While in fig. 2 two connection arms 17 are shown, also for example four connection arms 17 may be provided, with two connection arms 17 being parallel to each other.

The connection arms 17 are pivotally attached to the crane connection element 16, they pivot around first pivot axes 19. The other end of the connection arms 17 are pivotally connected to the frame 6, they pivot around pivot axes 20.

The tilting system 14 further comprises at least one actuator 21, for example a hydraulic or pneumatic cylinder, which is controlled by at least one control means 22, which communicates with respective sensor means 23 for example provided at the frame 6. The actuator 21 respectively the cylinder is fixed with one end to the frame 6 and with the other end, for example the piston end, to the left connection arm 17.

Fig. 2 shows the initial position, i.e. the balanced position or situation in which the blade 8 is in a horizontal position and also the tilting system is in an initial position in which the connection element 16 is not shifted relative to the frame 6 respectively the frame beam 18. In this position, the centre of gravity 24 of the whole arrangement hanging at the connection device 4 is in perfect vertical alignment with the principle connection or connection point or centre 25 of the whole arrangement at the connection device 4. This vertical alignment is shown by the vertical line L1. Therefore, fig. 2 shows the balanced initial situation.

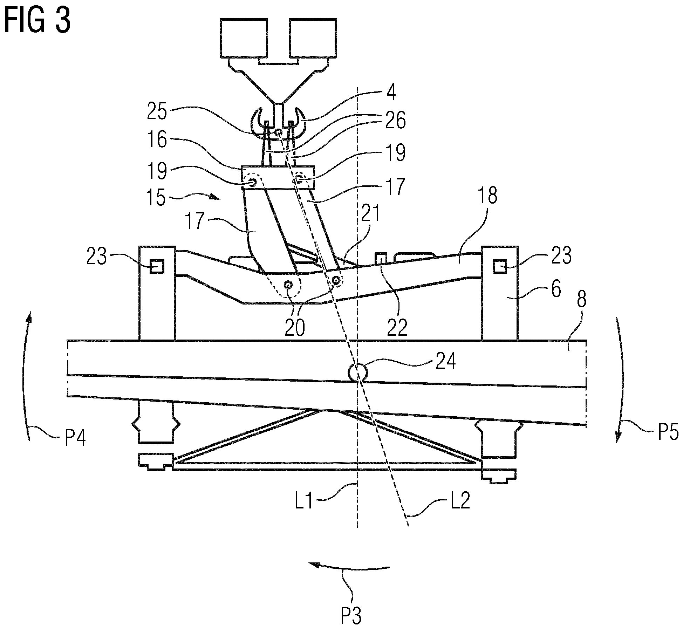

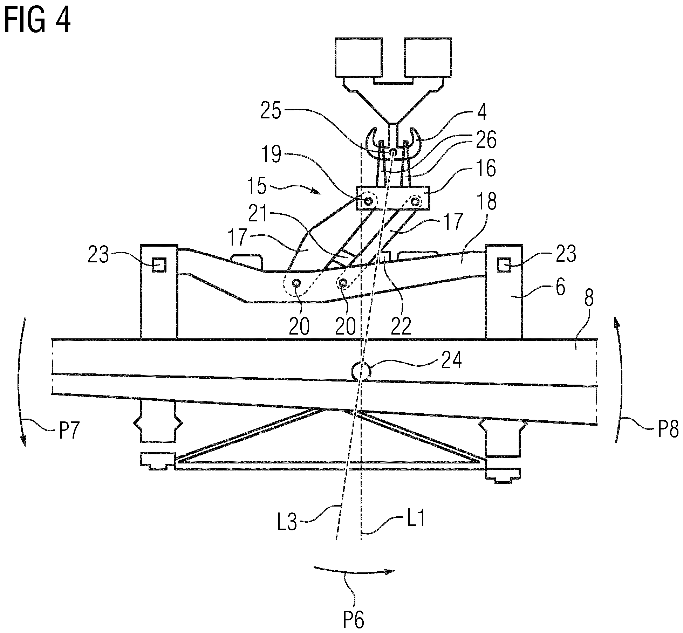

When wind interacts with the blade 8, it may happen that, due to this interaction and the resulting pressure differences occurring at the blade 8, an unwanted tilting movement occurs, as already mentioned in regard to fig. 1. In order to counterbalance this unwanted movement or moment, the tilting system 14 may in response to a measured upcoming or given unwanted tilting movement by the sensor means 23 be controlled by the control means 22 to generate a counter movement. For this purpose, the control 22 controls the actuator 21, i.e. the cylinder, as shown in figs. 3 and 4. In fig. 3 the actuator 21 respectively the cylinder is extended. As it is fixed with the one end to the frame 6 respectively the frame beam 18 and with the other end to the connection arm 18, the connection arm 17 is actively pivoted around its axis 20. As the connection element 16, the connection arms 17 and the frame 6 respectively the frame beam 18 build a parallelogram, this action of the actuator 21 results in a change of the geometry of the crane connection device 15 as shown in fig. 3. Due to the pivot connection and movement, the parallelogram shifts to the left resulting in a horizontal shift of the connection element 16 relative to the frame 6. As fig. 3 clearly shows, this shifts the connection point or centre 25 to the left of the centre of gravity 24 as shown by the line L2, which is clearly angled relative to the line L1.

Due to this shift of the centres 25 and 24 relative to each other, the centre of gravity is no longer in vertical alignment with the connection point or centre 25. But the centre of gravity 24 immediately tends to re-balance and to re-align with the connection point or centre 25, resulting in a swivelling or pivoting movement of the whole arrangement around the connection point or centre 25, with the centre of gravity 24 again being positioned vertically under the connection point or centre 25. This movement is shown by the arrow P3. As the mechanical arrangement of the crane connection device 15 and its connection or orientation to the frame 6 is fixed, this re-balancing of the centre of gravity 24 does not change this mechanical geometry, but results in a tilting of the frame 6 and thus the blade 8. Therefore, one end of the blade 8 moves upwards, as shown by the arrow P4, while the other end of the blade 8 moves downwards, as shown by the arrow P5. As the root 12 is provided at the right end of the blade 8, which in this embodiment moves downwards, this way of shifting respectively this actuation of the tilting system 14 provides a vertical downward tilting movement, which compensates an unwanted upward movement of the root 12.

Fig. 4 shows the opposite operation. In this embodiment the control 22, depending on the information of the sensor means 23, controls the actuator 21 such that it retracts, the piston is retracted in the cylinder. This results in a rotational movement of the connection arm 17 connected to the actuator 21 around its pivot axis 20, it pivots to the right, compared with fig. 2. Due to the mechanical connection of the connection element 16 via the connection arm 17 to the blade 8 respectively the frame beam 18, this parallelogram shifts to the right, as shown in fig. 4. It is obvious that here the centre of gravity is shifted to the left of the connection point or centre 25. This is shown by the line L3 which again is angled relative to the vertical line L1.

Also, here the centre of gravity 24 tends to re-align exactly vertically underneath the connection point or centre 25. Therefore, the whole arrangement pivots or swivels to the right around the connection point or centre 25, as shown by the arrow P6. This results in a vertical downward movement of the left end of the blade 8, as shown by the arrow P7 and a vertical upward movement of the right end of the blade 8 comprising the root 12, as shown by the arrow P8.

In the final re-aligned and re-balanced position, the whole arrangement as shown in figs. 3 and 4 is slightly tilted relative to the connection device 4, as the crane hook is pivotable around a horizontal pivot axis at the connection device 4 which allows for the slight tilt.

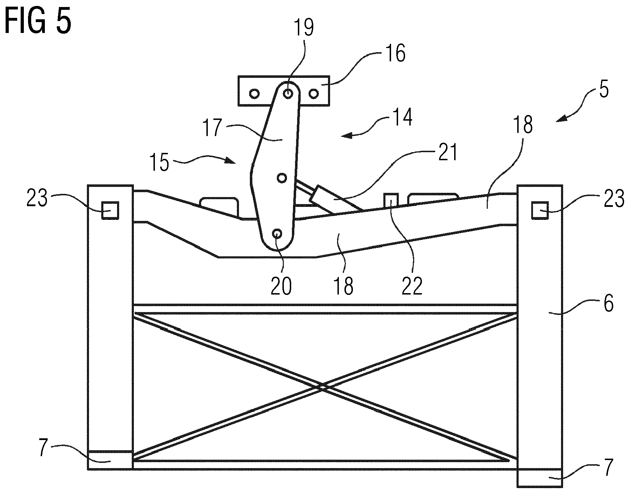

Fig. 5 shows another embodiment of an inventive lifting apparatus 5, while the same reference numbers are used for the same items.

Also, this lifting apparatus 5 comprises a frame 6 with end-standing support arms 7. It also comprises a tilting system 14, comprising a beam-like connection element 16 and one or two parallel connection arms 17 connecting the connection element 16 to the frame 6 respectively the frame beam 18. Again, the one or two parallel connection arms 17 are pivotally arranged or coupled to the connection element 16 and the frame beam 18 in respective pivot axes 19, 20.

An actuator 21, again preferably a hydraulic or pneumatic cylinder, is attached with one end to the frame beam 18 and with the other end to the or at least one of the connection arms 17. It is controlled by a control means 22 communicating with several sensor means 23. The working principle is comparable to the principle disclosed in figs. 2-4. If the control means 22 senses an upcoming or given unwanted tilt, it controls the actuator 21 which either extends or retracts. If it extends, the connection arm 17 is swivelled to the left around the pivot axis 20, resulting in a shift of the connection element 16 to the left, comparable to the situation of fig. 3. The centre of gravity 24 is shifted to the right relative to the connection point or centre 25, resulting in a re-balancing movement for re-aligning vertically, as explained in relation to fig. 3. This results in an upward movement of the left side of the frame 6 and thus the left end of the blade 8 and in a downward movement of the right side of the frame 6 respectively the right end of the blade 8.

If the actuator 21 is retracted, the connection arm 17 will swivel to the right around the pivot axis 20, i.e.in a clockwise direction. This makes the connection element 16 shift to the right respectively the centre of gravity 24 shift to the left, as shown in fig. 4. When re-aligning, the centre of gravity 24 swivels to the right, making the right end of the frame 6 and therefore the right end of the blade 8 to move vertically upwards, while the left end of the frame 6 respectively the left end of the blade 8 moves vertically downwards.

Also here, due to the mechanically fixed change of the relative orientation of the crane connection device 15 relative to the frame 6, the whole arrangement pivots around the connection point or centre 25 and is therefore slightly tilted.

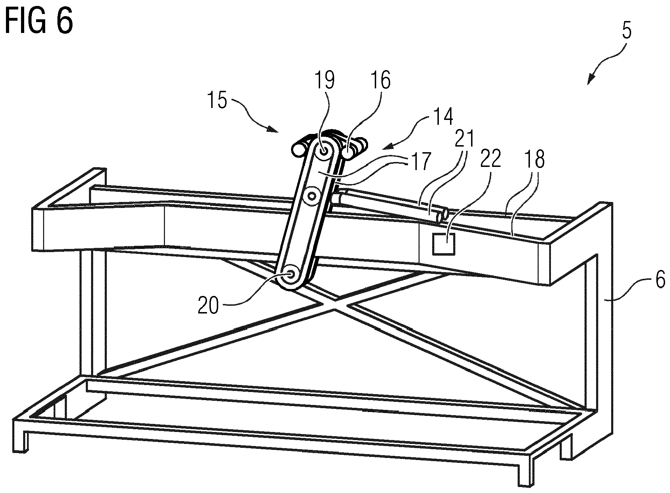

Fig. 6 shows another embodiment of a lifting apparatus 5 again comprising a frame 6 which is comparable to the embodiment of fig. 5. The tilting system 14 comprises the crane connection device 15 with the connection element 16 and two connection arms 17 arranged in parallel, but extending downwards alongside of the two parallel frame beams 18, where they are fixed to the frame beams 18 in respective pivot axis 20. In this embodiment two actuators 21, i.e. two separate hydraulic or pneumatic cylinders are provided, which are controllable by a common control means 22 in response to respective information of several sensor means. The actuators 21 are synchronously controlled so that both connection arms 17 may synchronously be pushed or pulled and pivoted around the pivot axes 20. This overall function is comparable to the function described in regard to fig. 5 respectively figs. 2 to 4.

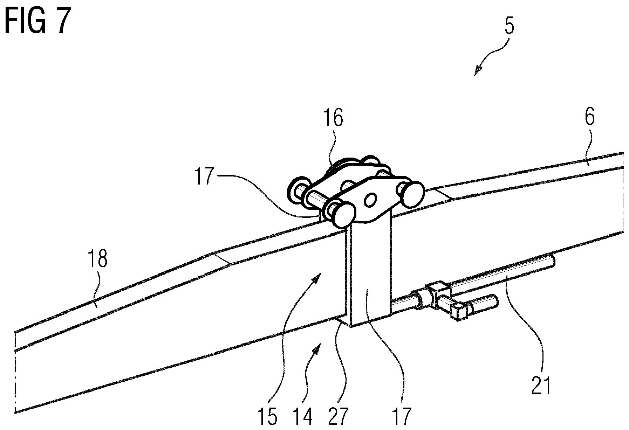

Fig. 7 shows an embodiment of an inventive lifting apparatus 5, again comprising a frame 6 with a frame beam 18. Also here, a tilting device 14 is provided, comprising a beam-like connection element 16, to which two connection arms 17 are attached which extend along both sides of the frame beam 18, and which are connected by a bottom connection arm 27. The whole setup is like a sledge which can move linearly along the frame beam 18. This sledge arrangement may be roller guided, with a linear rolling bearing provided between the sledge arrangement and the frame beam 18, while also a slide bearing may be provided.

Again, at least one actuator 21 is provided which also here is shown as a cylinder attached with one end to the frame 6 and with the other end to the connection arm 27 for example. By extending or retracting the actuator 21, the crane connection device 15 may linearly be moved along the frame beam 18, changing the relative position of the crane connection device 15 and the frame 6 relative to each other. This linear shift again results in a horizontal shift of the centre of gravity 24 relative to the connection point or centre 25 which again results in a re-alignment of the centre of gravity 24, as previously explained in detail. This again allows for tilting the frame 6 respectively the whole arrangement due to the flexible connection of the arrangement to the connection device 4 via the cables 26 and therefore to an actively controlled tilting of the component respectively blade 8.

Also here, the crane connection device 15 may be moved out of the initial position in both directions, i.e. to the left or right side along the frame beam 18 so that the respective tilt to the one side or to the other side may be controlled as needed.

In addition to the tilting device 14 the inventive lifting device 5 may also be equipped with a pitching device for pitching the blade 8 around its longitudinal axis. Also, this pitching results in the generation of a counter tilt movement or moment.

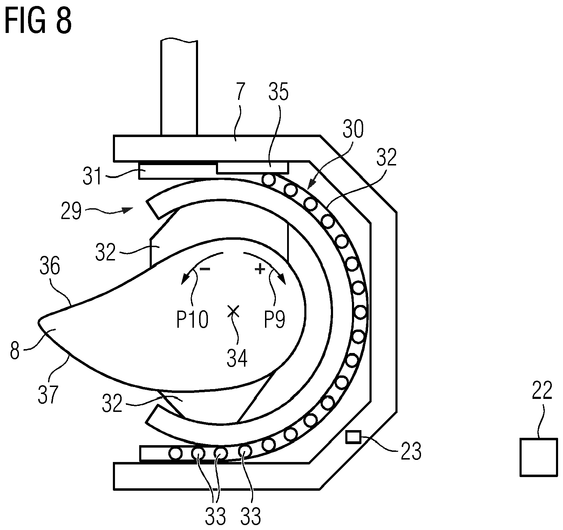

As fig. 8 shows in more detail, the rotor blade 8 is fixed in the holding means 29. Each C-shaped arm 7 for example is equipped with a separate holding means 29, which holding means are part of a pitching system 30. The holding means 29 comprises a holding part 31, which here has for example a C-shaped form, to which holding part 31 respective holding elements like holding or clamping pads or the like are attached, which, as figs. 8-10 show, firmly fix the rotor blade 8. They are adapted to hold the blade 8 in a region with a non-circular cross-section, as clearly shown in the figures. The clamping mechanism of the holding means shown in the figure is just an example. It may be realized in various ways, e.g. with clamping claws with at least one of the claws being movable from an open to a clamping position, or with a scissor-like moving means for at least one of the clamps.

The holding means 29 is rotatable around a rotation axis, which in general is a horizontal axis, which is parallel to a central axis of the frame respectively the lifting apparatus in general. For rotating the holding means 29 it comprises respectively is arranged on an arched guide means 32, here in form of a C-shaped guiderail or the like, along which it is movable respectively rotatable. The guide means 32 is equipped with a number of rollers 33, on which the holding part 31 rolls and is guided, when it rotates around the rotation axis 34 of the holding means 29 respectively the pitching system 30. The rollers 33 may be arranged along the whole path along which the holding part 31 moves, or only at some separate points along the path. Instead of rollers 33 also sliding elements building a slide bearing may be used.

For effecting this rotational movement, at least one actuator 35 is provided, whereby, as in this embodiment, two separate holding means 29 are provided at each support arm 7, two respective actuators 35, one for each holding means 29, are provided, which are synchronized, in order to realize a synchronized movement of the holding part 31. An actuator 35 may for example be a hydraulic or pneumatic or electric cylinder, which can be changed in its length and which is with one end coupled to, for example, the support arm 7, while the other end is coupled to the holding part 18 or the like. Certainly, the actuator 35 may also be an electric motor which is mechanically coupled for example by a spindle drive or a toothed connection to the holding part 31 etc. Any actuator is suitable, as long as it is able to initiate a circular or rotating movement of the holding part 31 and with it of the blade 8 along the guide means 32.

For controlling the actuator 35 the control device 22 of the tilting system, 14 may be used, which controls the one or both actuators 35 in order to adjust the spatial orientation of the blade 8 by pitching it. The control device 22 communicates with the respective actuator 35, and also with the at least one, preferably more, sensor means 23, which is adapted to sense the spatial orientation of the lifting apparatus 5 respectively the frame 6 especially in regard of the vertical orientation respectively a vertical movement, which orientation or movement is an indicator of the vertical position or movement of the root 12 which needs to be aligned with the mounting interface 9. This sensor means 23 may for example be a position sensor or an acceleration sensor or the like. Besides the fully automatic control also a partly automatic control is possible, e.g. with a sensor means sensing a movement of the lifting apparatus and a manual control of the actuators based on the sensor information or the like.

The control device 22, as already mentioned, is adapted to analyze the sensor means information in order to determine whether an unwanted vertical movement of the lifting apparatus 5 and therefore of the root 12 is likely to happen or is already given, and which measures need to be taken in order to counter this unwanted movement. So, the control device 22 may, due to the constant monitoring of the spatial situation by the one or the several sensor means 23, immediately respond to any relevant information from the constantly monitoring sensor means 23 in order to immediately control or provide a respective counteraction by not only controlling the actuator 21 of the tilting system 14, but also the actuators 35 of the pitching system 30 in order to rotate the blade 8 in a clockwise direction (see arrow P9) or in a counterclockwise direction (see arrow P10). The control device is adapted to determine the direction of rotation based on the information regarding the direction of the possible or given movement and the known orientation of the blade 8 fixed in the holding means 29, respectively its airfoiled surfaces.

Fig. 8 shows the arrangement of the blade 8 in the position, in which it is fixed or gripped by the holding means 29 for the first time on the ground in order to be lifted to the hub. In this position, the holding parts 38 of both holding means 29 are arranged in a basic position or an intermediate position, from which in both clockwise and counterclockwise directions for example the same angle of rotation may be run. If now the blade 8 is lifted, it is in the basic horizontal position.

When now wind blows, the wind may interact with the blade 8 and flow around the upper surface 36 and the lower surface 37 of the blade 8, which surfaces 36, 37 have different shapes due to the non-circular cross-section of the blade 8, as clearly shown in figs. 8-10. This leads to different wind speeds on the upper and lower surface side, as the upper surface 36 and the lower surface 37 have different lengths, along which the wind flows. As commonly known, a pressure difference results, which may generate a certain suction or drag in the vertical direction, making the blade move downwards or upwards, and therefore also making the root 12 move downwards or upwards, as the blade 8 and therefore the lifting apparatus 5 are movable around the horizontal axis of the hook of the connection device 4, as already mentioned.

In order to counteract or compensate this unwanted vertical movement, it is possible by controlling the pitching system 30 to rotate the rotor blade 8 around the longitudinal axis 34 either in a clockwise direction (arrow P9) or in a counterclockwise direction (arrow P10), with the basic position of fig. 8 as a starting point. This rotational movement is controlled by the control device 22, which is adapted to calculate the necessary angle of rotation in order to change the spatial orientation of the blade 8 respectively its upper and lower surface 36, 37 in a way sufficient to compensate or counteract the vertical tilt respectively the pressure difference which is the cause for the unwanted vertical tilt.

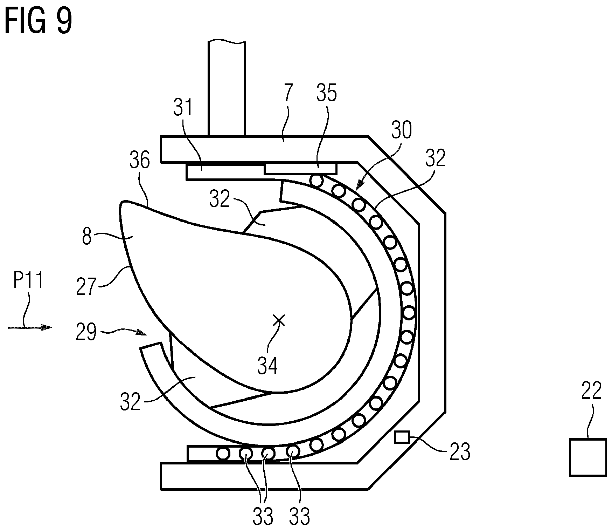

Fig. 9 shows an example, where the control device 22 controls the pitching system 30 to rotate in the clockwise direction according to arrow P9. It controls the actuators 35 to move the holding part 31 along the arched guide means 32, which movement is guided by the rollers 33 allowing for a very soft but stable movement. This rotates the holding means 29 around the horizonal rotation axis 34, and with it also the blade 8 is rotated around its longitudinal axis changing its spatial position as clearly shown in fig. 9. Fig. 9 shows that the upper surface 36 has another orientation relative to the blowing wind, which blows in this example from the left side as shown by arrow P11, as in the basic position according to fig. 8. The same is true for the lower surface 37. By changing this spatial orientation, the aerodynamic situation is severely changed, as the surface lengths, along which the wind flows along the upper and lower surfaces 36, 37, changes. Resulting from this, also the pressure difference between the upper and the lower side changes, and with it the given suction or drag, which is the reason for the unwanted vertical movement. This movement therefore is counteracted and compensated.

As the control device 22 is adapted to calculate the necessary pitching angle, a very precise counteraction or compensation is possible. It is to be noted, that any rotational position between the basic starting position and the maximum rotational position in the clockwise or counterclockwise direction may be controlled in order to mostly or completely compensate the unwanted vertical movement, and in order to avoid any overcompensation. It is possible that a calculation means respectively the control device itself calculates or simulates the effect of various pitching movements or angles at the given wind direction and wind speed on the component respectively the blade to model how it reacts. The control device can then choose the most promising pitching angle and pitching direction based on this input.

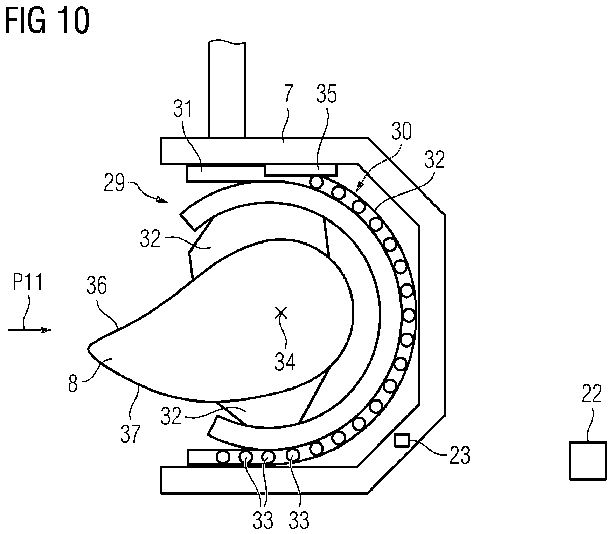

Fig. 10 shows an example, in which the pitching system 30 is controlled by the control device 22 for a movement of the holding part 31 in the counterclockwise direction according to arrow P10. As shown, the position of the holding part 31 relative to the guiding means 32 has again changed compared to the basic situation, as the holding part 31 is moved along the arched guide means 32 by controlling the actuators 35. As shown in fig. 10, the upper surface 36 and the lower surface 37 again have a very different spatial orientation relative to the blowing wind respectively the wind direction (arrow P11), compared to the basic situation of fig. 8 or to the situation of fig. 9. Again, the aerodynamic situation changes severely resulting in a remarkable change of the pressure difference between the upper and the lower blade side and therefore the suction or drag resting on the blade 8. Again, this allows for a compensation of the unwanted tilt movement in this specific situation.

It is to be noted, that the figures are only principle sketches. This is especially with regard to the shown wind direction according to arrow P11 in figs. 9 and 10. This arrow is only shown in order to demonstrate the change of the spatial orientation of the upper and the lower surface 36, 37, relative to a wind direction. It is no indication that the blade 8 needs to be rotated or positioned according to fig. 9, when the wind blows from this direction, or needs to be positioned according to fig. 10 in this wind direction situation. The direction and the angle of rotation is solely determined by the control device 22 based on the sensor means information.

The pitch or rotation angle of the pitching system 30 may in total be for example 20°, with an angle of +-10° starting from the basic position according to fig. 2. It may certainly also be a larger angle, for example a total angle of 40° with a respective pitching angle of +-20° starting from the basic position of fig. 2. A maximum angle may for example be 90°, with a pitch angle of +-45° starting from the basic position of fig. 2. As mentioned, any intermediate position may be controlled and fixed in order to compensate vertical tilt.

The inventive tilting system 14, and additionally the pitching system 30, allows for a very variable change of the aerodynamic properties of the whole lifting arrangement respectively of the blade and therefore of the forces acting on the lifting apparatus 5 and therefore for a very variable, changeable interaction of the blade 8 with the wind in order to produce a defined counteracting tilt moment or tilt movement, which counteracts or compensates an unwanted tilt moment or tilt movement resulting from the interaction of the fast blowing wind with the airfoil-shaped rotor blade 8. The compensation or counteracting system, the tilting system (and if given in combination with the simultaneously controlled pitching system 17), allows for the installation of such a rotor blade 8 also at weather conditions in which up to now such an installation was not possible due to the strongly blowing wind. Now, the installation may also be done at wind speeds of 16m/s and higher, as the system allows for an excellent compensation of any unwanted vertical movement. Therefore, the weather window, in which the installation may be done is significantly widened. Furthermore, the inventive stabilization or compensation allows for a faster installation, as no time is needed for a cumbersome positioning or orientation of the rotor blade root 12 relative to the mounting interface 9, as no unwanted vertical movement occurs and as the horizontal movement can be countered by the taglines.

Finally, the inventive lifting apparatus respectively the crane with the inventive compensation or counteracting pitching system allows for installing even larger blades, which interact even more with the wind causing the previously mentioned problems with an unwanted vertical movement, as this movement can be compensated.

Although the present invention has been described in detail with reference to the preferred embodiment, the present invention is not limited by the disclosed examples from which the skilled person is able to derive other variations without departing from the scope of the invention.

## Claims

1. Lifting apparatus for a lifting crane (1), adapted to carry an elongated component (8), comprising a frame (6) with at least one holding means (29) for holding the component with an essentially horizontal orientation and a crane connection device (15) for connecting the apparatus (5) to the lifting crane (1), **characterized in that** a tilting system (14) for actively tilting the frame (6) or the apparatus (5) relative to the horizontal plane.

2. Lifting apparatus according to claim 1, **characterized in that** the tilting system (14) is adapted to shift the crane connection device relative to the frame (6).

3. Lifting apparatus according to claim 1 or 2, **characterized in that** the crane connection device (15) comprises at least one crane connection element (16) and at least one connection arm (17) or connection arm construction comprising several connection arms (17) coupling the connection element (16) to the frame (6), wherein the connection arm (17) or the connection arms (17) are either pivotally attached to the connection element (16) and the frame (6) or wherein the connection device (15) or the connection arm (17) or the connection arms (17) are linearly movable along the frame.

4. Lifting apparatus according to one of the preceding claims, **characterized in that** the tilting system (14) comprises at least one controllable actuator (21) for tilting the frame (6) relative to the crane connection device (15).

5. Lifting apparatus according to claim 4, **characterized in that** the actuator (21) is coupled to the or one of the connection arms (17) and the frame (6) for shifting them relative to each other.

6. Lifting apparatus according to claim 5, **characterised in that** the actuator (21) is or comprises a hydraulic or pneumatic or electric cylinder, an electric motor or a spindle drive.

7. Lifting apparatus according to one of the claims 4 to 6, **characterized in that** at least one control device (22) is provided for controlling the movement of the at least one actuator (21).

8. Lifting apparatus according to claim 7, **characterized in that** at least one sensor means (23) for sensing a given or upcoming vertical tilting of the lifting apparatus (5) or of the frame (6) or of the holding means is provided, whereby the control device (22) is adapted to control the actuator depending on the sensor means information.

9. Lifting apparatus according to one of the preceding claims, **characterized in that** a pitching system (30) for pitching the component (8) around its longitudinal axis is provided.

10. Lifting apparatus according to claim 9, **characterized in that** the at least one holding means (29) as a part of the pitching system (30) is pivotable around a rotation axis (34) .

11. Lifting apparatus according to claim 9 or 10, **characterized in that** the or each holding means (29) comprises a C-shaped holding part (31) with holding elements (32) for engaging the component, which holding part (31) is movable along an arched guide means (32).

12. Lifting apparatus according to claim 11, **characterized in that** the holding part (31) is guided on rollers (33) or slide elements arranged in or along the guide means (32).

13. Crane comprising a lifting means (2) with a lifting apparatus (5) according to one of the preceding claims.

14. Method for lifting an elongated component, using a crane (1) according to claim 13, **characterized in that** during the lifting process, when a vertical tilting movement of the lifting apparatus (5) or at least the possibility of such a vertical tilting movement is detected, the tilting system (14) is controlled by a control device (22) based on the provided sensor means information for tilting the frame (6) relative to the horizontal plane for counteracting the tilting movement.

15. Method according to claim 14, **characterized in that** in addition to controlling the tilting system (14) during the lifting process the pitching system (30) is controlled by the control device (22) based on the provided sensor means information.
